# EUROPÄISCHE PATENTSCHRIFT

(11) **EP 0 844 116 B1**
(45) Veröffentlichungstag und Bekanntmachung des Hinweises auf die Patenterteilung: **18.04.2001**
(21) Anmeldenummer: 97120165.2
(22) Anmeldetag: 18.11.1997
(51) Int. Cl.: B60G 17/015, F16F 9/05, G01S 15/88

(54) **Kraftfahrzeug-Luftfedersystem**
Air spring system for a motor vehicle
Système à ressort pneumatique pour un véhicule automobile

(30) Priorität: 21.11.1996 DE 19648112
(43) Veröffentlichungstag der Anmeldung: 27.05.1998
(73) Patentinhaber: ContiTech Luftfedersysteme GmbH, 30165 Hannover (DE)
(72) Erfinder: Fischer, Norbert, 31319 Sehnde (DE)
(74) Vertreter: Schneider, Egon

(56) Entgegenhaltungen:
- DE-A- 3 620 957
- GB-A- 1 231 766
- US-A- 3 974 475
- US-A- 4 038 629
- US-A- 4 543 649
- US-A- 4 798 369
- US-A- 5 060 916
- US-A- 5 104 144
- PATENT ABSTRACTS OF JAPAN vol. 017, no. 056 (M-1362), 4.Februar 1993 & JP 04 266632 A (SUMITOMO METAL IND LTD), 22.September 1992,
- PATENT ABSTRACTS OF JAPAN vol. 096, no. 012, 26.Dezember 1996 & JP 08 216880 A (BRIDGESTONE CORP), 27.August 1996,
- PATENT ABSTRACTS OF JAPAN vol. 017, no. 138 (P-1505), 22.März 1993 & JP 04 313093 A (AMADA METRECS CO LTD), 5.November 1992,
- PATENT ABSTRACTS OF JAPAN vol. 012, no. 243 (P-728), 9.Juli 1988 & JP 63 036171 A (TOSHIBA CORP), 16.Februar 1988,

## Beschreibung

Die Erfindung betrifft eine Einrichtung zur berührungslosen Abstandsmessung innerhalb der Luftfeder eines Kraftfahrzeuges nach der Impuls/Echo-Methode. Entsprechend dem Oberbegriff des Anspruchs 1 besteht die Anordnung aus einer chassisfesten Sende/Empfangs-Komponente und einer achsfesten Reflektor-Komponente, wie sie aus der US-A-4 798 369 vorbekannt ist. Eine weitere ähnliche Anordnung ist z.B. aus der DE-A-36 20 957 bekannt.

Zur Bestimmung des Abstands zwischen Fahrzeugaufbau und Achse sind innerhalb des Luftfederbalges Strecken von ca 0 - 600 mm Länge bei Temperaturen zwischen -40°C und +120°C zu vermessen.
Ein Vorteil bei der Verwendung von Ultraschall innerhalb von Luftfedern besteht darin, daß keine Verwirbelung der Schallwellen durch den Fahrtwind möglich ist.

In der genannten Offenlegungsschrift wird ein Luftfedersystem beschrieben, welches eine Meßvorrichtung zur Bestimmung des Abstands zwischen dem karosseriefesten Teil der Feder, einerseits, und dem achsfesten Teil der Feder, andererseits, enthält. Die Meßvorrichtung besteht aus einem Ultraschallwandler zur Aussendung einer Reihe von Impulsen in axialer Richtung der Feder. Weiterhin sind Mittel zum Empfang dieser axial ausgerichteten Impulse vorgesehen, nachdem sie mindestens einmal die Höhe des Gehäuseinneren durchlaufen haben. Vorzugsweise ist das zweite Endglied ein Reflektor, und der Empfänger befindet sich im Bereich des Senders.

Die mit solchen Sende/Empfangseinheiten ausgestatteten Luftfedern konnten sich in der Praxis nicht durchsetzen. Als nachteilig hat sich nämlich herausgestellt, daß sich die Sende/Empfangseinheit mittig auf der Längsachse an dem oberen Teil der Luftfeder befindet. Um den nötigen Bauraum für dieses Teil und deren Zuleitungen zu schaffen, ist es erforderlich, den mittig oberhalb der Luftfeder befindlichen Fahrzeuglängsträger anzubohren oder ihn konstruktiv mit einer entsprechenden Aussparung zu versehen. Dies erfordert zusätzliche Fertigungsschritte und ist schwer zu montieren. Würde man die Sende/Empfangseinrichtung samt Reflektor außermittig anordnen, so ergäbe sich keine reproduzierbare Wegstrecke zum Reflektor, denn die Einfederung von Luftfedern erfolgt nicht ausschließlich in axialer Richtung.

Auch würde bei einer außermittigen Anordnung der ausgesandte Strahl nicht wieder an seinen Ausgangspunkt zurückreflektiert, denn Luftfedern bewegen sich beim Federn - infolge der elastischen Achsbefestigung - auf einer nicht genau vorherbestimmbaren Raumkurve, d. h.: Verwinkelungen und Seitenversätze sind nicht eindeutig bekannt. Die Torkelbewegungen hätten Auswirkungen auf die Reflexion.

Würde man als Reflektor ebenfalls eine außermittige, d. h. außeraxiale, Fläche anstrahlen, so ergäbe sich aufgrund von Winkeländerungen zwischen chassisfestem und achsfestem Teil der Luftfeder - insbesondere bei einseitiger Belastung des Fahrzeugs und bei Kurvenfahrt - eine nichtreproduzierbare Veränderung der geometrischen Verhältnisse. Die Angabe eines mittleren axialen Abstands zwischen chassisfestem und achsfestem Teil wäre so keinesfalls möglich. Wollte man diesen Mißstand dadurch zu überwinden suchen, daß man beidseitig, d. h. paarweise, eine außermittige Sender/Empfänger-Reflektorstrecke installierte, so würde sich damit der apparative Aufwand verdoppeln.

Die vorliegende Erfindung hat sich die Aufgabe gestellt, die genannten Mißstände zu überwinden und eine mit einem Abstandsmeßsystem bestückte Luftfeder zu schaffen, die universell einsetzbar ist, ohne auf eine spezielle Fahrzeugträgerkonstruktion angewiesen zu sein.

Die Erfindung löst das Problem gemäß Anspruch 1 in der Weise, daß die Sende/Empfangskomponente nicht mittig sondern außerhalb der Federlängsachse angeordnet ist. Auch ist der von der Sendekomponente ausgesandte Ultraschallstrahl nicht achs-parallel sondern schräg ausgerichtet. Und zwar in Richtung auf die konvex ausgebildete, koaxial angeordnete und in Richtung auf die Sende/Empfangs-Komponente ausgerichtete Oberfläche eines am (Fahrzeug-)achsfesten Teil der Feder befindlichen Reflektors.

Bei dem Einsatz einer einteiligen Ultraschall-Komponente (bei welcher Sender und Empfänger dasselbe Bauteil bzw. in enger räumlicher Nähe zueinander angeordnet sind,) wird mit Hilfe der erfindungsgemäßen Anordnung erreicht (und auch zuverlässig gewährleistet), daß stets hinreichend viel Schallintensität vom Reflektor zum Empfänger zurückgeworfen wird.

Wegen der außermittigen Anordnung der Ultraschall-Komponente ist weder eine spezielle Fahrzeugträger-Konstruktion erforderlich noch braucht ein Eingriff in den vorhandenen Fahrzeugträger vorgenommen zu werden.

Die zu der Ultraschall-Komponente korrespondierende Reflektor-Komponente kann Teil des üblichen Gummipuffers sein. D. h.: Für den Reflektor werden keine zusätzlichen Bauteile benötigt. Auch gibt es durch die erfindungsgemäße Reflektor-Komponente keine Verringerung des Federfreiwegs.

Durch die erfindungsgemäße Ausgestaltung des Reflektors wird stets genügend Ultraschall auf den Empfänger zurückgeworfen. Das Nutzsignal ist so groß, daß es eindeutig aus diversen Störstrahlen (Mehrfachreflexionen usw.) herausgelesen werden kann.
Wegen der mittigen Anordnung des Reflektors haben Torkelschwankungen keinen Einfluß auf die zu messende (mittlere) Federhöhe.

Für den Fall, daß sich der Gummipuffer nicht auf dem Abrollkolben sondern an der Abdeckplatte befindet, kann auch ein sonstiges erfindungsgemäß geformtes, auf dem Abrollkolben angebrachtes Aufbauteil als Reflektor dienen.

Die Anordnung der Ultraschall-Komponente in einem Rohrstutzen hat den Vorteil, daß von dem Einfederweg nichts verlorengeht. Durch den Rohrstutzen ist die Ultraschall-Komponente von außen zugänglich. Die elastische Lagerung der Ultraschall-Komponente verhindert Ausbreitung von Körperschall in der Anschlußplatte der Luftfeder und gewährleistet eine zuverlässige Dichtheit gegenüber dem Außenraum. Ein im Bereich der Ultraschall-Komponente installierter Thermofühler dient zur rechnerischen Kompensation der sich mit den Temperaturschwankungen ergebenden Variation der Schallgeschwindigkeit.

In den Zeichnungen ist ein Ausführungsbeispiel der Erfindung dargestellt.

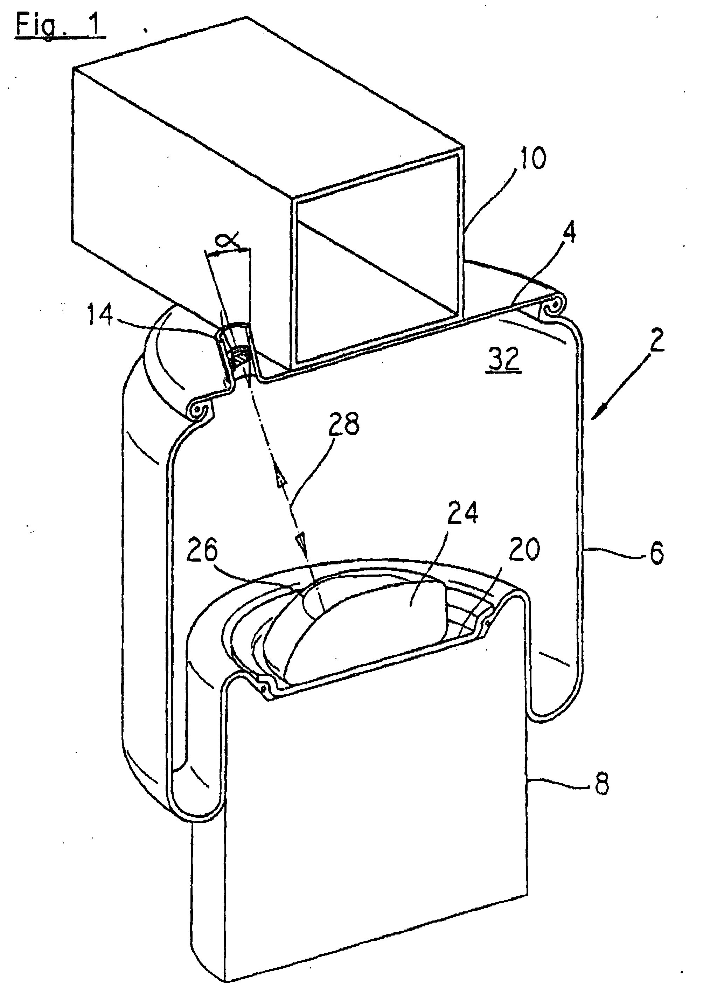

Fig. 1 zeigt eine perspektivische Darstellung einer Luftfeder nebst Ultraschall-Anordnung.

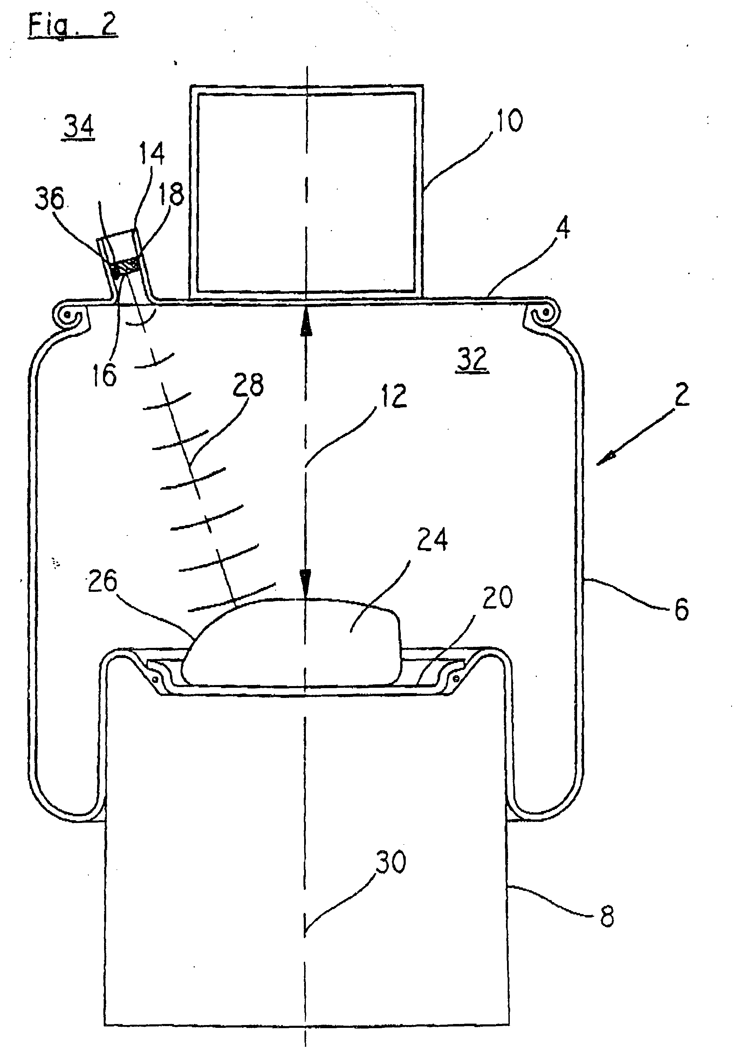

Fig. 2 zeigt eine solche Luftfeder im Längsschnitt.

üblicherweise besteht eine Luftfeder 2 im wesentlichen aus einer Abdeckplatte 4, einem Rollbalg 6 und einem Abrollkolben 8. Die Abdeckplatte 4 ist am Fahrzeuglängsträger 10 chassisfest angebracht. Der Abrollkolben 8 ist radseitig befestigt. Beim Einfederungsvorgang rollt der Rollbalg 6 auf dem Abrollkolben 8 ab, wobei sich der (lichte) Abstand 12 zwischen Abdeckplatte 4 und Abrollkolben 8 entsprechend ändert. Diesen Abstand 12 gilt es zu messen.
Zu diesem Zweck befindet sich erfindungsgemäß in der Abdeckplatte 4, und zwar seitlich vom Fahrzeuglängsträger 10, ein Rohrstutzen 14 mit einer als Sender und Empfänger ausgebildeten Ultraschall-Komponente 16. Die Ultraschall-Komponente 16 ist mittels eines Lagers 18 elastisch in der Weise angebracht, daS Luftdichtheit zwischen der Druckkammer (Innenraum der Luftfeder) 32 und dem Außenraum 34 besteht.
Neben dem Ultraschallwandler 16 ist ein Temperaturfühler 36 angeordnet.

Der Rohrstutzen 14 ist so gestaltet, daß der in der Luftfeder 2 befindliche Freiraum 12 durch ihn nicht eingeschränkt wird. Der Rohrstutzen 14 ist in ausgefedertem Zustand der Feder in Richtung auf die Mitte des Spanntellers 20, auf der üblicherweise ein Gummipuffer angebracht ist, gerichtet. Dort befindet sich eine erfindungsgemäß gestaltete Reflektor-Komponente 24, die Teil des (üblichen) Gummipuffers sein kann.

Die Oberfläche 26 der Reflektor-Komponente 24 ist asymmetrisch gewölbt. Sie kann vorzugsweise eine konvexe Gestalt aufweisen. Die (seitliche) Krümmung der Reflektoroberfläche 26 hängt vom Seitenversatz der Luftfeder ab. Die Achse (Flächennormale) 28 der Reflektor-Komponente 24 ist gegenüber der Luftfederachse 30 geneigt, und zwar in Richtung auf den mit der Ultraschall-Komponente 16 bestückten Rohrstutzen, d. h. die Richtung der Reflektor-Komponente 24 ist der Senderkomponente 16 entgegengerichtet.

### Einrichtung zur berührungslosen Abstandsmessung Bezugszeichenliste

- 2: Luftfeder
- 4: Abdeckplatte
- 6: Rollbalg
- 8: Abrollkolben
- 10: Fahrzeug(längs)träger
- 12: (lichter) Abstand zwischen Abdeckplatte und Abrollkolben, Freiraum
- 14: Rohrstutzen
- 16: Sender und Empfänger, Ultraschall-Komponente
- 18: elastisches Lager
- 20: Spannteller
- 24: Reflektor-Komponente
- 26: Oberfläche der Reflektor-Komponente
- 28: Flächennormale
- 30: (Symmetrie)achse der Luftfeder
- 32: Druckkammer
- 34: Außenraum
- 36: Temperaturfühler

## Patentansprüche

1. Einrichtung zur berührungslosen Abstandsmessung Innerhalb der Luftfeder (2) eines Kraftfahrzeuges mit einer Ultraschall-Anordnung bestehend aus einer chassisfesten Sende-/Empfangskomponente (16) und einer achsfesten Reflektorkomponente (24), wobei die Sende/Empfangskomponente (16) außermittig angeordnet ist, **dadurch gekennzeichnet**, daß die Reflektor-Oberfläche (26) der auf der Symmetrieachse (30) der Luftfeder (2) angeordneten Reflektorkomponente (24) konvex geformt und in Richtung auf die Sende/Empfangskomponente (16) ausgerichtet ist.

2. Einrichtung zur berührungslosen Abstandsmessung nach Anspruch 1,
**dadurch gekennzeichnet**,
daß die Reflektor-Oberfläche (26) aus der Oberfläche eines in die Luftfeder (2) integrierten Gummi-, Elastomer- oder Kunststoffpuffers gebildet wird.

3. Einrichtung zur berührungslosen Abstandsmessung nach Anspruch 1,
**dadurch gekennzeichnet**,
daß die Reflektoroberfläche (26) aus der Oberseite eines aus Metall oder Kunststoff bestehenden Spanntellers (20) auf dem Abrollkolben (8) gebildet wird.

4. Einrichtung zur berührungslosen Abstandsmessung nach einem der Ansprüche 1 - 3,
**dadurch gekennzeichnet,**
daß die Sende-/Empfangskomponente (16), einen Schallwandler umfaßt, der die elektrischen Ansteuersignale in Schallwellen umsetzt, und in einem in der Abdeckplatte (4) befindlichen Rohrstutzen (14) untergebracht ist.

5. Einrichtung zur berührungslosen Abstandsmessung nach Anspruch 4,
**dadurch gekennzeichnet,**
daß der Schallwandler (16) elastisch gelagert ist, wobei die elastische Lagerung (18) so ausgebildet ist, daß Luftdichtheit zwischen Druckkammer (32) und Außenraum (34) besteht.

6. Einrichtung zur berührungslosen Abstandsmessung nach einem der vorherigen Ansprüche,
**dadurch gekennzeichnet,**
daß ein Temperaturfühler (36) innerhalb der Luftfeder (2) zur Kompensation der Temperaturabhängigkeit der Schallgeschwindigkeit vorhanden ist.

## Claims

1. Means for contactlessly measuring distance internally of the air spring (2) of an automotive vehicle, having an ultrasonic arrangement comprising a transmitting/receiving component (26), which is fixed to the chassis, and a reflector component (24), which is fixed to the axle, the transmitting/receiving component (16) being disposed eccentrically, characterised in that the reflector surface (26) of the reflector component (24), which is disposed on the axis of symmetry (30) of the air spring (2), has a convex configuration and is orientated in the direction towards the transmitting/receiving component (16).

2. Means for contactlessly measuring distance according to claim 1, characterised in that the reflector surface (26) is formed from the surface of a rubber, elastomeric or plastics material buffer incorporated in the air spring (2).

3. Means for contactlessly measuring distance according to claim 1, characterised in that the reflector surface (26) is formed from the upper side of a clamping plate (20), which is made of metal or plastics material, on the roller piston (8).

4. Means for contactlessly measuring distance according to one of claims 1 - 3, characterised in that the transmitting/receiving component (16) includes an acoustic transducer which converts the electrical control signals into sound waves and is accommodated in a pipe socket (14) situated in the cover plate (4).

5. Means for contactlessly measuring distance according to claim 4, characterised in that the acoustic transducer (16) is resiliently mounted, the resilient bearing (18) being so adapted that there is airtightness between pressure chamber (32) and the outside area (34).

6. Means for contactlessly measuring distance according to one of the preceding claims, characterised in that a temperature sensor (36) is provided internally of the air spring (2) to compensate for the temperature-dependence of the sound velocity.

## Revendications

1. Dispositif pour la mesure sans contact d'une distance à l'intérieur du ressort pneumatique de suspension (2) d'un véhicule automobile, comportant un agencement à ultrasons constitué d'un composant d'émission-réception (16) fixe avec le châssis, et d'un composant formant réflecteur (24) fixe avec l'essieu, le composant d'émission-réception (16) étant agencé de manière décentrée, caractérisé en ce que la surface de réflecteur (26) du composant formant réflecteur (24) disposé sur l'axe de symétrie (30) du ressort pneumatique (2), est de forme convexe et est orientée en direction du composant d'émission-réception (16).

2. Dispositif pour la mesure sans contact d'une distance, selon la revendication 1, caractérisé en ce que la surface de réflecteur (26) est formée par la surface d'un tampon d'amortissement en caoutchouc, élastomère ou matière plastique, intégré au ressort pneumatique (2).

3. Dispositif pour la mesure sans contact d'une distance, selon la revendication 1, caractérisé en ce que la surface de réflecteur (26) est formée par la surface d'une coupelle de serrage (20) en métal ou matière plastique sur le piston de déroulement (8).

4. Dispositif pour la mesure sans contact d'une distance, selon l'une des revendications 1 à 3, caractérisé en ce que le composant d'émission-réception (16) comprend un transducteur sonore, qui convertit les signaux de commande électriques en ondes sonores, et qui est logé dans un embout tubulaire (14) se trouvant dans la plaque de recouvrement (4).

5. Dispositif pour la mesure sans contact d'une distance, selon la revendication 4, caractérisé en ce que le transducteur sonore (16) est monté de manière élastique, le montage élastique (18) étant conçu de façon à réaliser une étanchéité à l'air entre la chambre de pression (32) et l'espace extérieur environnant (34).

6. Dispositif pour la mesure sans contact d'une distance, selon l'une des revendications précédentes, caractérisé en ce qu'une sonde de température (36) est prévue à l'intérieur du ressort pneumatique (2) pour compenser l'effet de la température sur la vitesse du son.
